# EUROPEAN PATENT SPECIFICATION

(11) **EP 3 081 084 B1**
(45) Date of publication and mention of the grant of the patent: **02.09.2020**
(21) Application number: 15163823.6
(22) Date of filing: 16.04.2015
(51) Int. Cl.: A01N 25/04, A01N 51/00, A01N 43/90, A01P 7/00, A01P 7/04

(54) **SUBMICRON IMIDACLOPRID AND ABAMECTIN COMPOSITIONS**
SUBMIKRON-ZUSAMMENSETZUNGEN ENTHALTEND IMIDACLOPRID UND ABAMECTIN
COMPOSITIONS SUBMICRONIQUES COMPRENANT DE L'IMIDACLOPRIDE ET DE L'ABAMECTINE

(43) Date of publication of application: 19.10.2016
(73) Proprietor: Rotam Agrochem International Company Limited, Chai Wan (HK)
(72) Inventor: Bristow, James Timothy, Chai Wan, (HK)
(74) Representative: Straus, Alexander

(56) References cited:
- WO-A1-00/60940
- WO-A1-2011/015220
- WO-A2-2005/055714
- WO-A2-2005/087002
- WO-A2-2009/138523
- DATABASE WPI Week 200682 Thomson Scientific, London, GB; AN 2006-800800 XP002739939, & CN 1 810 117 A (SHI X) 2 August 2006 (2006-08-02)
- MIN LI ET AL: "A novel chitosan-poly(lactide) copolymer and its submicron particles as imidacloprid carriers", PEST MANAGEMENT SCIENCE, vol. 67, no. 7, 2 March 2011 (2011-03-02), pages 831-836, XP55190796, ISSN: 1526-498X, DOI: 10.1002/ps.2120
- YAN WANG ET AL: "Construction and evaluation of controlled-release delivery system of Abamectin using porous silica nanoparticles as carriers", NANOSCALE RESEARCH LETTERS, vol. 9, no. 1, 1 January 2014 (2014-01-01) , pages 655-655, XP55190858, ISSN: 1556-276X, DOI: 10.1186/1556-276X-9-655

## Description

### Technical field

The present invention relates to suspoemulsion (SE) formulations comprising imidacloprid and abamectin, having an average particle size of less than 1 micron.

### Background

Imidacloprid has an IUPAC name of (E)-1-(6-chloro-3-pyridylmethyl)-N-nitroimidazolidin-2-ylideneamine. Imidacloprid controls sucking insects, including rice, leaf and planthoppers, aphids, thrips and whiteflies. It is also effective against soil insects, termites and some biting insects, such as rice water weevil and Colorado beetle. Imidacloprid can be used as seed dressing, as soil treatment and as foliar treatment in different crops, *e.g.,* rice, cotton, cereals, maize, sugar beet, potatoes, vegetables, citrus fruit, pome fruit and stone fruit. It is generally commercialized as emulsion concentrate (EC), suspension concentrate (SC), soluble liquid (SL) and wettable powder (WP) formulations.

Abamectin is isolated from the fermentation of *Streptomyces avermitilis,* a naturally occurring soil actinomycete. Abamectin acts by stimulating the release of y-aminobutyric acid, an inhibitory neurotransmitter, thus finally activates chloride channels. Abamectin controls motile stages of mites, leaf miners, suckers, Colorado beetles, etc. on ornamentals, cotton, citrus fruit, pome fruit, nut crops, vegetables, potatoes and other crops. Abamectin is also used for controlling nematodes by seed treatment and fire ants. Abamectin is generally commercialized in EC formulation.

In recent years there has been a move towards increasing the efficacy, broaden the spectrum, and delay the resistance to insecticides by combining two or more active ingredients in the application.

CN1115964A describes a premix of imidacloprid and abamectin. It suggests the premix of imidacloprid and abamectin can be formulated as EC and WP.

US6,444,690B also describes a premix of imidacloprid and abamectin. It suggests that the mixture of the active ingredients can be formulated into customary formulations, such as solutions, emulsions, suspensions, powders, foams, pastes, granules, aerosols, active compound-impregnated natural and synthetic materials, very fine encapsulations in polymeric substances, and in coating formulations for seed, in formulations with smokes, such as fumigating cartridges, fumigating cans, fumigating coils and the like, and also ULV cold and warm mist formulation. These formulations are prepared in a known manner, for example by mixing the active ingredients with extenders (*e.g*., liquid solvents, pressurized liquefied gases and/or solid carriers), optionally with surface-active agents, (e.g., emulsifying agents and/or dispersing agents, and/or foam-forming agents).

Generally, imidacloprid SL and abamectin EC with clear dilution have very good efficacy. However, substantial quantities of polar and non-polar organic solvents are required to provide a high efficacy of SL and EC formulations. Yet, these organic solvents are known for their toxicological and ecotoxicological properties, the use of organic solvents leading to corresponding problems. Therefore, the Institute for the Control of Agrochemicals, Ministry of Agriculture (ICAMA) has prohibited the registration of EC formulation. Further, although the EC formulation is not been banned in some countries, the standards of emulsion concentrates for obtaining registration have fundamentally been raised. Besides, it is difficult to formulate imidacloprid SL and abamectin EC without the use of the current solvent systems which contain polar and/or non-polar organic solvents. So, developing a premix of imidacloprid and abamectin to EC or SL faces formulation and concurrently regulatory problems.

Active ingredients are often administered in the form of aqueous systems. Water-based formulations are obtained by dissolving, emulsifying and/or suspending active ingredients in water. For the active ingredients having low water solubility, they would be difficult to formulate in the form of the aqueous system. The aqueous systems containing solid active ingredients may be formulated as suspension concentrates (SC) or suspoemulsion (SE) formulations. However, these formulations are known to suffer from a variety of problems, such as agglomeration of solid active ingredients, irreversible thickening, serum formation or sedimentation as a hard packed precipitate. In the case of the SE formulation, the presence of an emulsified oil layer increases the risk of formulation failure due to the intrinsic instability of oil-in-water emulsions. Prolonged storage, storing at variation of extreme temperature, high-shearing and vibration increase the likelihood of failure.

WO 2009138523 discloses a formulated composition suitable for controlling or preventing pathogenic damage in a plant comprising (A) at least one solid active ingredient having a water solubility of at most 100 µg/litre at 25 °C at neutral pH, in an amount of at least 1 weight %, based on the total weight of the formulated composition, in an aeueous formulation further comprising a at least one non-ionic surface active compound, the weight ratio of surface active compound to active ingredient is in the range of from 1.5 to 15.0.

The stability and efficacy of the current imidacloprid and abamectin SE or SC formulation are not good. As is known, generally the efficacy of SE and SC formulations is worse than the efficacy of EC and SL formulations.

Hence there is a need for improving the physical stability and efficacy of imidacloprid and abamectin SE or SC formulation.

The present invention provides a formulation in which the physical stability and efficacy problems of imidacloprid and abamectin SE have been solved.

### SUMMARY OF THE INVENTION

The present invention provides a suspoemulsion formulation comprising:
(A) a continuous aqueous phase;
(B)
   (i) a dispersed emulsion phase comprising at least one liquid and abamectin;
   (ii) an emulsifier in a sufficient amount to emulsify the liquid and abamectin; and
(C)
   (i) a dispersed solid phase comprising imidacloprid having an average particle size of less than 1 micron;
   (ii) at least one dispersing agent in a sufficient amount to disperse imidacloprid and any other solid technical material present in the formulation;
wherein the solid phase is dispersed in aqueous and/or emulsion phase.

The invention also relates to a suspoemulsion formulation comprising:
(A) a continuous aqueous phase;
(B)
   (i) a dispersed emulsion phase comprising at least one liquid and imidacloprid;
   (ii) an emulsifier in a sufficient amount to emulsify the liquid and imidacloprid; and
(C)
   (i) a dispersed solid phase comprising abamectin having an average particle size of less than 1 micron; and
   (ii) a dispersing agent in a sufficient amount to disperse abamectin and any other solid technical material present in the formulation; wherein the solid phase is dispersed in aqueous phase and/or emulsion phase.

The present invention further relates to the use of the above composition for controlling insects in crops, especially cotton, citrus, tomato, potato, green pepper, watermelon, coffee and soybean, by using the suspoemulsion formulations, and to a use of the formulations in controlling injurious insects in crops.

### DETAILED DESCRIPTION OF THE INVENTION

Commercially available imidacloprid is formulated into soluble liquid (SL); and commercially available abamectin is normally formulated into emulsion concentrate (EC). Imidacloprid SL and abamectin EC are both known to exhibit a better biological efficacy. However, the use of organic solvents for preparing imidacloprid SL and abamectin EC is not good to the environment and the user. The aqueous systems/suspensions, like suspoemulsion (SE) and suspension concentrates (SC), do not have the problem occurring in EC or SL formulations. Recently, many kinds of SC have been developed. The aqueous systems/suspensions, however, are unavoidably inferior to the emulsifiable concentrate in biological effect. Particularly, when a water-insoluble active ingredient is used, the aqueous systems/suspensions are markedly inferior to the emulsifiable concentrate in biological effect.

SC formulation needs to apply at the dosage of 4 to 8 times more than EC one because the conventional SC formulation has a lower biological effect than EC formulation.

Therefore, the present invention provides suspoemulsion formulations with improved biological effect which comprises the active ingredient(s) in form of fine particles. For this reason, the present disclosure provides a method to prepare pesticide formulations comprising imidacloprid and abamectin in which in the dispersed solid phase the active ingredient has a small particle size, i.e., less than 1 µm, to achieve a better biological effect as compared with a similar formulation having an average particle size in excess of 1 micron.

By providing the composition as disclosed herein also other problems associated with such compositions, such as agglomeration of solid particles, irreversible thickening, serum formation or sedimentation of solids as a hard packed precipitate have been found not to show up any more, so that the present pesticide formulations exhibit improved physical storage stability, dispersibility and efficacy as compared with a similar formulation having an average particle size in excess of 1 micron.

The particle size of the active ingredient is measured by two different techniques. As used herein, the phrase "having an average particle size of less than 1 micron" refers to the active ingredient having the average particle size as determined by both Dv50 and Z-average of below 1 micron. The results of Dv50 and Z-average will be similar, when the particle size distribution is narrow and below 1 micron. The results will not be similar when there is a significant fraction of particles larger than 1 micron. The Z-average diameter of the active ingredient as defined herein is measured by photon correlation spectroscopy using equipment readily determinable by those skilled in the art such as a Malvern Nanosizer. The Dv50 particle size of the active ingredient is the median particle size as determined using available analytical devices such as Malvern Mastersizer.

The invention relates to a suspoemulsion formulation comprising:
(A) a continuous aqueous phase;
(B)
   (i) a dispersed emulsion phase comprising at least one liquid and abamectin;
   (ii) an emulsifier in a sufficient amount to emulsify abamectin; and
(C)
   (i) a dispersed solid phase comprising imidacloprid having an average particle size of less than 1 micron;
   (ii) a dispersing agent in a sufficient amount to disperse the imidacloprid and any other solid technical material present in the formulation; wherein the solid phase is dispersed in the aqueous phase and/or emulsion phase.

Further, the invention relates to a suspoemulsion formulation comprising:
(A) a continuous aqueous phase;
(B)
   (i) a dispersed emulsion phase comprising at least one liquid and imidacloprid;
   (ii) an emulsifier in a sufficient amount to emulsify the liquid and water-insoluble ingredients; and
(C)
   (i) a dispersed solid phase comprising abamectin having an average particle size of less than 1 micron;
   (ii) a dispersing agent in a sufficient amount to disperse the abamectin and any other solid technical material present in the formulation; wherein the solid phase is dispersed in the aqueous phase and/or emulsion phase.

In some embodiments, imidacloprid has an average particle size of less than 1 micron as the dispersed solid phase in the suspoemulsion formulation. In certain embodiments, abamectin has an average particle size of less than 1 micron as the dispersed solid phase in the suspoemulsion formulation.

The amount of imidacloprid in the formulation may be in the range of from about 1% to about 80%, preferably from about 5% to about 70%, more preferably about 10% to about 60%, even more preferred from about 10% to about 50% or from about 15% to about 40%, more preferred about 30%. The amount of abamectin in the formulation may be in the range of from about 0.5% to about 80%, preferably from about 0.5% to about 70%, more preferably from about 1% to about 60% or from about 1% to about 50%, or from about 1% to about 40%, or even from about 1% to about 30%, even more preferred from about 1% to about 20% or from about 1% to about 10%).

In the suspensions, especially suspoemulsions, surfactants function as emulsifiers, which are used to emulsify the oil phase with one water-insoluble technical material and dispersants to disperse another solid water-insoluble technical material. These surfactants should be compatible in one formulation. The surfactants may act as both an emulsifier and a dispersant.

Suitable surface-active compounds are, depending on the nature of the active ingredient, non-ionic, cationic and/or anionic surfactants and mixtures of surfactants having good emulsifying, dispersing and wetting properties.

Suitable anionic surfactants are known in the art. For example, polyarylphenol polyalkoxyether sulfates and/or phosphates; C₈₋₁₈ alcohol polyalkoxyether phosphates, carboxylates, and/or citrates; alkyl benzesulfonic acids; C₈₋₂₀ alkyl carboyxlates including fatty acids; C₈₋₂₀ alcohol sulfates; C₈₋₂₀ alcohol phosphate mono-and diester; C₈₋₂₀ alcohol and (C₈₋₂₀ alkyl)phenol polyoxyethylene ether carboxylates, sulfates and sulfonates; C₈₋₂₀ alcohol and (C₈₋₂₀ alkyl)phenol polyoxyethylene phosphate mono-and diesters; C₈₋₂₀ alkylbenzene sulfonates, naphthalene sulfonates and formaldehyde concendates thereof; lignosulfonates; C₈₋₂₀ alkyl sulfosuccinates and sulfoccinamates; C₈₋₂₀ acryl glutamates, sarcosinates, isethionates and taurates; water-soluble soaps and mixtures thereof. Commercially available polyarylphenol polyalkoxyether sulfates and phosphates include, for example, SOPROPHOR®4D384 (tristyrylphenol (EO)₁₆ sulfate ammonium salt, Rhodia Corporation), SOPROPHOR®3D33 (tristyrylphenol (EO)₁₆ phosphate free acid, Rhodia Corporation, SOPROPHOR®FLK (tristyrylphenol (EO)₁₆ phosphate potassium salt, Rhodia Corporation), SOPROPHOR®RAM/384 (tristyrylphenol polyethoxylated ether sulfate neutralized with polyethoxylated oleylamine, Rhodia Corporation). Commercially available C₈₋₁₈ alcohol polyethoxyether phosphates, carboxylates and cetrates include STEPFAC® 8180 (tridecylalcohol (EO)₃ phosphate, Stepan Corporation), STEPFAC®8181 (tridecylalcohol (EO)₆ phosphate), Stepan Corporation), STEPFAC®8182 (tridecylalcohol (EO)₁₂ phosphate, Stepan Corporation). Exemplary alkylbenzene sulfonic acids and salts thereof include dodecylbenzene sulfonic acid, and metal (for example sodium or calcium), ammonia or amine salts of the alkylbenzene sulfonic acids, including dodecylbenzene sulfonic acid. Amine neutralized versions include primary amines, diamines, triamines and alkanol amines.

Exemplary nonionic surfactants include ethylene oxide-propylene oxide block copolymers; ethylene oxide-butylene oxide block copolymers; C₂₋₆ alkyl adducts of ethylene oxide-propylene oxide block copolymers; C₂₋₆ alkyl adducts of ethylene oxide-butylene oxide block copolymer; polypropylene glycol; polyethylene glycols; polyarylphenol polyethoxy ethers; polyalkylphenol polyethoxy ethers; polyglycol ether derivatives of aliphatic or cycloaliphatic alcohols or of saturated or unsaturated fatty acids and alkylphenol. Commercially available nonionic surfactants include, for example, TOXIMUL®8320 (butyl ether derivative of EO/PO block copolymer, Stepan Corporation), WITCONOL®NS-500LQ (butyl ether derivative of EO/PO block copolymer, CK Witco Corporation).

Suitable non-ionic surfactants are nonlyphenol polyethoxy ethanols, vegetable oil polyglycol ethers, polyadducts of ethylene oxide and propylene oxide, tributyl phenoxy polyethoxy ethanol, octayl phenoxy polyethoxy ethanol.

Cation surfactants are preferably quaternary ammonium salts carrying, as N-substituted, at least one C₈-C₂₂ alkyl radical and, as further substituents, unsubstituted or halogenated lower alkyl, benzyl or hydroxyl-lower alkyl radicals. The salts are preferably in the form of halides, methyl sulfates or ethyl sulfates, for example stearyl trimethylammonium chloride or benzyl bis(2-chloroethyl)ethylammonium bromide.

The amount of surfactant(s) depends on the particular active ingredients selected for the composition and the absolute and relative amounts of these desired. Suitable amount of surfactants selected from the classes or specific examples provided herein can be determined by routine experimentation, the test being that substantially no phase separation, sedimentation or flocculation is exhibited by the composition following storage at 20 - 25 °C for a period of 24 hours, or, for preferred embodiments, following a longer period of storage over a broader range of temperatures as indicated above. Typically the total amount of surfactants in the composition / formulation is ranged from about 1 % to about 30 % by weight of the composition / formulation. The surfactants may act as both an emulsifier and a dispersant. The amount of the emulsifier is ranged from about 1 % to about 30 % by weight of the composition / formulation. The amount of the dispersant is ranged from about 1 % to about 30 % by weight of the composition / formulation.

These compositions may also comprise other auxiliaries such as wetting agents, chemical stabilizers, viscosity controlling agents, thickeners, binders, tackifiers, fertilizers and anti-foam agents.

Examples of suitable polymeric stabilizers that may be used in the present invention have a molecular weight between 10,000 and 1,000,000 daltons and include, but are not limited to polypropylene, polyisobutylene, polyisoprene, copolymers of monoolefins and diolefins, polycarylates, polystyrene, polyvinyl acetate, polyurethanes or polyamides.

Representative anti-foam agents are silica, polydialkylsiloxanes, in particular polydimethylsiloxanes, fluoroaliphatic esters or perfluoroalkylphosphonic/perfluoro-alkylphosphonic acids or the salts thereof and mixtures thereof. Preferred are polydimethylsiloxanes.

The formulation in general comprise between 0.1 % and 95 % by weight of the composition, preferably between 0.5 % and 90 %.

The imidacloprid and abamectin mixtures are suitable for combating animal pest, in particular insects, arachnids and nematodes, encountered in agriculture, in forestry, in the protection of stored products and of materials, and in the hygiene filed, and have good plant tolerance and favorable toxicity to warm-blooded animals. They are active against normally sensitive and resistant species and against all or some stages of developments. The pests include aphids, citrus rustmite, whitefly, spider mite, russet mite and redbanded stink bug, etc.

The rates of application (use) of the composition of the present invention may vary widely. The rate at which the compositions are applied will depend upon the particular type of insects to be controlled, the degree of control required, and the timing and method of application. In general, the compositions can be applied in an amount such that imidacloprid and abamectin at a rate of 10 - 400 g a.i. per ha, preferably 20 - 300 g a.i. per/ha.

The following examples are given by way of illustration and not by way of limitation of the invention. Where not otherwise specified throughout this specification and claims, percentages are by weight.

### Example

### Example 1

| | % wt |
|---|---|
| Imidacloprid | 30 |
| Abamectin | 2.8 |
| PLURONIC®PE 6800 (BASF) | 3.5 |
| TERSPERSE®2500 (Huntsman) | 1.5 |
| Silicone antifoam agent | 0.1 |
| Xanthan gum | 0.2 |
| Propylene glycol | 5.0 |
| Preservative | 0.15 |
| Water | balance to 100 |

### 1.1 Preparation of imidacloprid and abamectin mill base

The suitable amount water, non-ionic and ionic surfactants and imidacloprid and abamectin were mixed together. The antifoam agent and suitable amount xanthan gum were added and mixed until uniform. If needed, the millbase was milled to the desired particle size.

### 1.2 Preparation of final product

According to the above composition, propylene glycol, xanthan gum and preservative and water were added into the imidacloprid and abamectin millbase and blended until uniform.

### Example 2

### 2.1 Preparation of abamectin EW

| | Wt% |
|---|---|
| Abamectin | 10 |
| N-methyl pyrrolidone | 20 |
| TWEEN®80 (Croda) | 5 |
| RHODACAL® 70B (Rhodia) | 2 |
| Water | 22 |

Abamectin was dissolved in N-methyl pyrrolidone, then TWEEN®80and RHODACAL®70B were added and mixed until uniform to form an oil phase. The oil phase was then added to the water to form an emulsified oil phase with a particle size of 1-40 microns.

### 2.2 Preparation of imidacloprid millbase

| | Wt % |
|---|---|
| Imidacloprid | 60 |
| PLURONIC®PE 6800 (BASF) | 3.5 |
| TERSPERSE®2500 (Huntsman) | 1.5 |
| Silicone antifoam agent | 0.1 |
| Xanthan gum | 0.2 |
| Water | 54.7 |

Water, PLURONIC®PE 6800, TERSPERSE®2500 and imidacloprid were mixed together. The antifoam agent and xanthan gum were added and mixed until uniform. If needed, the millbase was milled to the desired particle size.

### 2.3 Preparation of final product

| | Wt% |
|---|---|
| Abamectin EW | 14 |
| Imidacloprid millbase | 50 |
| Propylene glycol | 5 |
| TOXIMUL®8320 (Stepan) | 6 |
| Xanthan gum | 0.15 |
| Preservative | 0.15 |
| Water | balance to 100 |

The abamectin EW, propylene glycol, the TOXIMUL®8320 and some of the water were blended together. The imidacloprid millbase was added and blended. Next, the xanthan gum and preservative were added and blended until uniform.

### Example 3 sample preparation

### 3.1 Preparation of imidacloprid EW

| | Wt% |
|---|---|
| Imidacloprid | 60 |
| N-methyl pyrrolidone | 20 |
| TWEEN®80 (Croda) | 5 |
| RHODACAL®70B | 2 |
| Water | balance to 100 |

Imidacloprid was dissolved in N-methyl pyrrolidone, then TWEEN®80 and RHODACAL®70B were added and mixed until uniform to form an oil phase. Then add the oil phase to the water to form an emulsified oil phase with a particle size of 1-40 microns.

### 3.2 Preparation of abamectin mill base

| | Wt% |
|---|---|
| Abamectin | 10 |
| PLURONIC®PE 6800 (BASF) | 3.5 |
| TERSPERSE®2500 (Huntsman) | 1.5 |
| Silicone antifoam agent | 0.1 |
| Xanthan gum | 0.2 |
| Water | 34.7 |

Water, PLURONIC®PE 6800, TERSPERSE®2500 and abamectin were mixed together. The antifoam agent and xanthan gum were added and mixed until uniform. If needed, the millbase was milled to the desired particle size.

### 2.3 Preparation of final product

| | Wt% |
|---|---|
| Imidacloprid EW | 50 |
| Abamectin millbase | 14 |
| Propylene glycol | 5 |
| TOXIMUL®8320 (Stepan) | 6 |
| Xanthan gum | 0.15 |
| Preservative | 0.15 |
| Water | balance to 100 |

Imidacloprid EW, propylene glycol, TOXIMUL®8320 and water were blended together. The abamectin millbase was added and blended. Next, the xanthan gum and preservative were added and blended until uniform.

### Example 4

### Re-dispersing of imidacloprid and/or abamectin millbase

Stability protocol: The millbase samples from section 1.1, 2.2, 3.2 were stored in 2 oz. jars at 38 °C for 6 weeks. The ability to re-disperse sediment was rated on how long, it takes to homogenize the sample by shaking at a moderate speed. Shorter time to re-disperse the sediment are desirable. The jars were shaken horizontally for two complete shake in one second (one complete shake = a complete forward and backward motion). The sediment must be completely re-dispersed, all sediment from the bottom of the jar and no lumps or agglomerates in the bulk of the sample.

Sample 1-1 represents a submicron millbase as set forth in section 1.1. Sample 2-1 represents a submicron mill base as set forth in section 2.2. Sample 3-1 represents a submicron mill base as set forth in section 3.2. Sample 1-2, 2-2, and 3-2 has a similar composition but contains millbase having larger particles.

**Table 1**

| **Sample** | **Particle Size Malvern Nanovern Nanosizer* (Z-AVERAGE, µm)** | **Particle size Malvern Mastersizer* (Median, DV50, µm)** | **Time to Homogenize (second)** |
|---|---|---|---|
| 1-1 | 0.621 | 0.58 | 25 |
| 1-2* | 0.964 | 1.32 | 56 |
| 2-1 | 0.568 | 0.573 | 15 |
| 2-2* | 1.212 | 1.523 | 80 |
| 3-1 | 0.854 | 0.892 | 10 |
| 3-2* | 0.987 | 1.432 | 70 |

| | | | |
|---|---|---|---|
| *Millbase outside the scope of the claimed invention | | | |

From Table 1, imidacloprid and/or abamectin having an average particle size within the scope of the present invention (example 1-1, example 2-1 and example 3-1) were significantly easier to re-disperse.

### Example 5

### Improved dilution performance of final product with submicron millbase

Dilution protocol: The final product formulations from sections 1.2, 2.3 and 3.3, were diluted using water with a hardness of 50 ppm and 1000 ppm to 100 mL in 100 mL graduated cylinders. The graduated cylinders were inverted for 10 complete inversions. The cylinders were left undisturbed at room temperature for 24 hours. After 24 hours, the number of inversion needed to completely re-disperse the sediment was noted. The lower the number of inversion required to completely the sediment represents an improvement in the ability to re-disperse the final product.

Sample 2-1 represents a submicron millbase as described in section 1.2. Sample 3-1 represents a submicron millbase as described in section 2.3 Sample 4-1 represents a submicron millbase as described in section 3.3. Sample 2-2, sample 3-2 and sample 4-2 have a similar composition but contain millbase having a larger average particle size.

**Table 2**

| **Sample** | **Final product / Millbase** | **50ppm** | **1000ppm** |
|---|---|---|---|
| 2-1 | Final product with submicron millbase | 10 inversions | 10 inversions |
| 2-2* | Final product with non-submicron millbase | 50 inversions | 50 inversions |
| 3-1 | Final product with submicron millbase | 6 inversions | 6 inversions |
| 3-2* | Final product with non-submicron millbase | 30 inversions | 30 inversion |
| 4-1 | Final product with submicron millbase | 7 inversions | 7 inversions |
| 4-2* | Final product with non-submicron millbase | 40 inversions | 40 inversions |

| | | | |
|---|---|---|---|
| *Final product outside the scope of the claimed invention | | | |

It is clear from the data set forth in Table 2, that the final product formulation prepared from the imidacloprid and/or abamectin millbase having an average particle size within the scope of the present invention was significantly easier to re-disperse than the formulation containing the imidacloprid and/or abamectin millbase outside of the scope of the present invention as evidenced by the significantly fewer inversions required to homogenize the final product.

### Example 6 efficacy test

Efficacy test protocol: Final product formulation, as set forth in samples 1.2, 2.3 and 3.3, are prepared. Soybean leaves were treated by being dipped into the preparation of active ingredient of the desired concentration and have spider mites placed on them while the leaves are still moist. After 6 days, the kill in % is determined. 100% means that all the spider mites have been destroyed; 0% means that none of the spider mites has been destroyed.

Sample 2-1 represents a submicron millbase as described in section 1.2. Sample 3-1 represents a submicron millbase as described in section 2.3 Sample 4-1 represents a submicron millbase as described in section 3.3. Sample 2-2, sample 3-2 and sample 4-2 have a similar composition but contain millbase having a larger average particle size.

**Table 3**

| **Sample** | **Final product / Millbase** | **Kill in % after 6 days (50 ppm)** | **Kill in % after 6 days (1000 ppm)** |
|---|---|---|---|
| 2-1 | Final product with submicron millbase | 80 | 100 |
| 2-2* | Final product with non-submicron millbase | 10 | 50 |
| 3-1 | Final product with submicron millbase | 90 | 100 |
| 3-2* | Final product with non-submicron millbase | 30 | 60 |
| 4-1 | inal product with submicron millbase | 90 | 100 |
| 4-2* | Final product with non-submicron millbase | 40 | 70 |
| Imidacloprid 200SL | Confidor, Bayer Crop) | 70 | 80 |
| Abamectin 1.8EC | Agrimec, Syngenta) | 70 | 80 |
| Imidacloprid 200SL + Abamectin 1.8EC | Tank mix | 90 | 90 |

It is clear from the data set forth in Table 3, that the final product formulation prepared from the imidacloprid and/or abamectin millbase having an average particle size within the scope of the present invention exhibited a significantly higher efficacy than the formulation containing the imidacloprid and/or abamectin millbase outside of the scope of the present invention, the relevant emulsion formulation as evidenced by the significantly high insect-killing rate.

Although only a few exemplary embodiments of this invention have been described in detail above, the scope of this invention is as defined in the following claims.

## Claims

1. A suspoemulsion formulation, comprising:
(A) a continuous aqueous phase;
(B)
(i) a dispersed emulsion phase comprising at least one liquid and abamectin;
(ii) an emulsifier in a sufficient amount to emulsify the liquid and abamectin; and
(C)
(i) a dispersed solid phase comprising imidacloprid having an average particle size of less than 1 micron;
(ii) at least one dispersing agent in a sufficient amount to disperse imidacloprid and any other solid technical material present in the formulation; wherein the solid phase is dispersed in aqueous and/or emulsion phase.

2. A suspoemulsion formulation, comprising:
(A) a continuous aqueous phase;
(B)
(i) a dispersed emulsion phase comprising at least one liquid and imidacloprid;
(ii) an emulsifier in a sufficient amount to emulsify the liquid and imidacloprid; and
(C)
(i) a dispersed solid phase comprising abamectin having an average particle size of less than 1 micron; and
(ii) a dispersing agent in a sufficient amount to disperse abamectin and any other solid technical material present in the formulation; wherein the solid phase is dispersed in aqueous phase and/or emulsion phase.

3. The suspoemulsion formulation according to claim 1 or 2, wherein the amount of imidacloprid is in the range of from 1% to 80%, and the amount of abamectin is in the range of from 0.5% to 80%.

4. Use of a formulation according to any of the preceding claims for controlling insects in crops.

5. The use according to claim 4, wherein the crops are selected from the group consisting of cotton, citrus, tomato, potato, green pepper, watermelon, coffee and soybean.

6. The use according to claim 4, wherein the insects are selected from the group consisting of rice-, leaf- and plant-hoppers, aphids, thrips and whiteflies, soil insects, termites, rice water weevil and Colorado beetle, mites, leaf miners, suckers, nematodes and fire ants.

## Patentansprüche

1. Suspo-Emulsions-Formulierung, welche umfasst:
(A) eine kontinuierliche wässrige Phase;
(B)
(i) eine dispergierte Emulsions-Phase, die mindestens eine Flüssigkeit und Abamectin umfasst;
(ii) einen Emulgator in einer hinreichenden Menge, um die Flüssigkeit und Abamectin zu emulgieren; und
(C)
(i) eine dispergierte feste Phase, die Imidacloprid mit einer durchschnittlichen Partikelgröße von weniger als 1 µm umfasst;
(ii) mindestens einen Dispergator in einer hinreichenden Menge, um Imidacloprid und jedes andere in der Formulierung vorliegende feste technische Material zu dispergieren; worin die feste Phase in wässriger und/oder Emulsions-Phase dispergiert ist.

2. Suspo-Emulsions-Formulierung, welche umfasst:
(A) eine kontinuierliche wässrige Phase;
(B)
(i) eine dispergierte Emulsions-Phase, die mindestens eine Flüssigkeit und Imidacloprid umfasst;
(ii) einen Emulgator in einer hinreichenden Menge, um die Flüssigkeit und Imidacloprid zu emulgieren; und
(C)
(i) eine dispergierte feste Phase, die Abamectin mit einer durchschnittlichen Partikelgröße von weniger als einem µm umfasst; und
(ii) einen Dispergator in einer hinreichenden Menge, um Abamectin und jedes andere in der Formulierung vorliegende feste technische Material zu dispergieren; worin die feste Phase in wässriger Phase und/oder Emulsions-Phase dispergiert ist.

3. Suspo-Emulsions-Formulierung nach Anspruch 1 oder 2, worin die Menge von Imidacloprid in dem Bereich von 1% bis 80% liegt, und die Menge von Abamectin in dem Bereich von 0,5% bis 80% liegt.

4. Verwendung einer Formulierung nach einem der vorstehenden Ansprüche zum Bekämpfen von Insekten in Feldkulturen.

5. Verwendung nach Anspruch 4, wobei die Feldkulturen ausgewählt sind aus der Gruppe bestehend aus Baumwolle, Zitrusfrüchten, Tomate, Kartoffel, grünem Pfeffer, Wassermelone, Kaffee und Sojabohne.

6. Verwendung nach Anspruch 4, wobei die Insekten ausgewählt sind aus der Gruppe bestehend aus Reis-, Zwerg- und Spitzkopfzikaden, Blattläusen, Fransenflüglern und Weißen Fliegen, Bodeninsekten, Termiten, dem Reiskäfer und dem Kartoffelkäfer, Milben, Blattminierern, Pflanzensaftsaugern, Nematoden und Feuerameisen.

## Revendications

1. Formulation de suspoémulsion comprenant :
(A) une phase aqueuse continue ;
(B)
(i) une phase d'émulsion dispersée comprenant au moins un liquide et de l'abamectine ;
(ii) un émulsifiant en quantité suffisante pour émulsifier le liquide et l'abamectine ; et
(C)
(i) une phase solide dispersée comprenant de l'imidaclopride présentant une grosseur moyenne de particule inférieure à 1 micron ;
(ii) au moins un agent dispersant en quantité suffisante pour disperser l'imidaclopride et toute autre matière technique solide présente dans la formulation ; la phase solide étant dispersée dans la phase aqueuse et/ou dans la phase d'émulsion.

2. Formulation de suspoémulsion, comprenant :
(A) une phase aqueuse continue ;
(B)
(i) une phase d'émulsion dispersée comprenant au moins un liquide et de l'imidaclopride ;
(ii) un émulsifiant en quantité suffisante pour émulsifier le liquide et l'imidaclopride ; et
(C)
(i) une phase solide dispersée comprenant de l'abamectine présentant une grosseur moyenne de particule inférieure à 1 micron ; et
(ii) un agent dispersant en quantité suffisante pour disperser l'abamectine et toute autre matière technique solide présente dans la formulation ; la phase solide étant dispersée dans la phase aqueuse et/ou dans la phase d'émulsion.

3. Formulation de suspoémulsion selon la revendication 1 ou 2, la quantité d'imidaclopride étant située dans la plage de 1% à 80% et la quantité d'abamectine étant située dans la plage de 0,5% à 80%.

4. Utilisation d'une formulation selon l'une quelconque des revendications précédentes pour lutter contre les insectes dans les cultures.

5. Utilisation selon la revendication 4, les cultures étant choisies dans le groupe constitué par le coton, les agrumes, la tomate, la pomme de terre, le poivron vert, la pastèque, le café et le soja.

6. Utilisation selon la revendication 4, les insectes étant choisis dans le groupe constitué par les cicadelles brunes, les cicadelles, les hémiptères, les aphidiens, les thysanoptères et les mouches blanches, les insectes du sol, les termites, le charançon aquatique du riz et le doryphore, les mites, les mineuses des feuilles, les insectes suceurs, les nématodes et les fourmis rouges.
